# EUROPÄISCHE PATENTSCHRIFT

(11) **EP 3 312 440 B1**
(45) Veröffentlichungstag und Bekanntmachung des Hinweises auf die Patenterteilung: **06.11.2019**
(21) Anmeldenummer: 17195555.2
(22) Anmeldetag: 09.10.2017
(51) Int. Cl.: F16B 2/24, B60R 13/08, F16B 5/06, F16B 21/08

(54) **BEFESTIGUNGSKLAMMER**
FIXING CLIP
PINCE D'ANCRAGE

(30) Priorität: 20.10.2016 DE 102016120057
(43) Veröffentlichungstag der Anmeldung: 25.04.2018
(73) Patentinhaber: LISI AUTOMOTIVE Mecano GmbH, 69123 Heidelberg (DE)
(72) Erfinder: Demel, Otto, 69123 Heidelberg (DE); Endres, Markus, 69214 Eppelheim (DE); Gerhardt, Michael, 85283 Wolnzach (DE); Spitzer, David, 87719 Mindelheim (DE)
(74) Vertreter: Habermann Intellectual Property Partnerschaft von Patentanwälten mbB

(56) Entgegenhaltungen:
- WO-A2-2015/007277
- FR-A1- 2 700 587
- US-A1- 2004 155 162

## Beschreibung

Die vorliegende Erfindung betrifft eine Befestigungsklammer zur Festlegung eines flächigen Elements, das eine Aussparung aufweist, an einem Bauelement, das eine Bohrung mit einem Gewinde aufweist, wobei die Befestigungsklammer einen Anlageabschnitt mit mindestens einer Anlageebene zur Anlage an eine erste Seite des flächigen Elements aufweist, die von der Bohrung abgewandt ist, und wobei die Befestigungsklammer in einem Verbindungsabschnitt ein erstes, flexibles Halteelement aufweist, das mit dem Anlageabschnitt verbunden ist und so ausgebildet ist, dass es durch die Aussparung des flächigen Elements hindurch in die Bohrung eingreift, wenn die Anlageebene auf der ersten Seite des flächigen Elements aufliegt.

In der Automobilindustrie und in weiteren Industriezweigen ist es oftmals nötig, flächige Elemente an Bauelementen festzulegen. Bei den flächigen Elementen kann es sich beispielsweise um Dämmmatten handeln. Diese müssen in Fahrzeugen teilweise an schwer zugänglichen Stellen montiert werden. Hier ist es wünschenswert, wenn sich die Dämmmatten schnell und einfach befestigen lassen. Es ist eine weitere Anforderung, eine ausreichend stabile Befestigung des flächigen Elements an einer Oberfläche zu gewährleisten.

Aus dem Stand der Technik sind Befestigungsklammern bekannt, die eine Festlegung eines flächigen Elements an einem Bauelement, das eine Bohrung mit einem Gewinde aufweist, erlauben. Bei dem Bauelement kann es sich um eine Wand, einen Metallkörper oder ein sonstiges Objekt handeln, das eine Oberfläche aufweist, an der das flächige Element festgelegt werden soll. Die vorbekannten Befestigungsklammern weisen eine Anlageebene mit einem flexiblen Halteelement auf. Das Halteelement wird durch eine Aussparung in dem flächigen Element hindurch in die Bohrung geführt und greift in die Bohrung ein. Die Befestigungsklammer wird so weit in die Aussparung eingeschoben, dass ein Anlageabschnitt der Befestigungsklammer auf einer Seite des flächigen Elements, die von der Bohrung abgewandt ist, aufliegt. In dieser Position besteht eine kraftschlüssige Verbindung zwischen einer Wand der Bohrung und dem Halteelement. Dadurch wird die Befestigungsklammer in der Bohrung gehalten. Die Befestigungsklammer kann aus der Bohrung entnommen werden, indem das Halteelement verbogen wird, sodass die kraftschlüssige Verbindung zwischen dem Halteelement und der Wand der Bohrung aufgehoben wird. WO 2015/007277 A2 offenbart eine Befestigungsklammer nach dem Stand der Technik.

Vorbekannte Befestigungsklammern dieser Bauart weisen jedoch den Nachteil auf, dass deren Montage umständlich ist. Wird eine Befestigungsklammer in das flächige Element eingebracht, bevor das flächige Element an das Bauelement herangeführt worden ist, so fällt die Befestigungsklammer leicht aus dem flächigen Element heraus.

Der vorliegenden Erfindung liegt deshalb die Aufgabe zugrunde, eine Befestigungsklammer bereitzustellen, die verbesserte Montageeigenschaften aufweist.

Die Aufgabe wird gelöst durch eine Befestigungsklammer, die erfindungsgemäß in dem Verbindungsabschnitt ein zweites, elastisches Halteelement aufweist, das mit dem Anlageabschnitt verbunden ist und so ausgebildet ist, dass es durch die Aussparung des flächigen Elements hindurch das flächige Element an einer zweiten Seite des flächigen Elements, die der Bohrung zugewandt ist, so hintergreift, dass durch die Befestigungsklammer eine Anpresskraft auf die zweite Seite des flächigen Elements ausgeübt wird, wenn die Anlageebene auf der ersten Seite des flächigen Elements aufliegt, wobei das zweite Halteelement einen ersten Schenkel aufweist und in einen zweiten Schenkel mündet, und wobei der erste Schenkel und der zweite Schenkel einen spitzen Winkel einschließen.

Somit kann die Befestigungsklammer durch die Aussparung des flächigen Elements hindurchgeführt werden, bevor das flächige Element an dem Bauelement montiert worden ist. Die Befestigungsklammer übt nun eine Anpresskraft auf das flächige Element von beiden Seiten aus, und zwar auf der ersten Seite des flächigen Elements durch die Anlageebene und auf der zweiten Seite des flächigen Elements durch das zweite Halteelement. Hierdurch wird die Befestigungsklammer sicher in der Aussparung gehalten und kann nicht aus dieser herausfallen, bevor das flächige Element an dem Bauelement montiert wird.

Eine genaue Positionierung des flächigen Elements an einem Bauelement wird durch die erfindungsgemäße Befestigungsklammer ebenfalls erleichtert, denn das flächige Element kann mit der bereits daran befestigten Befestigungsklammer so lange über eine Oberfläche des Bauelements geschoben werden, bis das erste Halteelement in eine Bohrung in dem Bauelement eindringt. Die Bohrung kann somit leichter aufgefunden werden.

Zusätzlich dazu, dass die erfindungsgemäße Befestigungsklammer eine leichtere Vormontage ermöglicht, ist sie auch bei der Entfernung eines flächigen Elements von einem Bauelement besonders vorteilhaft. Bei den aus dem Stand der Technik vorbekannten Befestigungsklammern tritt das Problem auf, dass diese nach der Entnahme leicht aus einer Aussparung in dem flächigen Element herausfallen können. Dieses Problem tritt bei der erfindungsgemäßen Befestigungsklammer nicht auf, denn diese wird durch das zweite Halteelement sicher an dem flächigen Element gehalten. Wenn es gewünscht ist, die Befestigungsklammer aus dem flächigen Element zu entfernen, dann kann das zweite Halteelement zusammengedrückt werden und durch die Aussparung in dem flächigen Element hindurch aus diesem herausgezogen werden.

Wenn die Anlageebene an dem flächigen Element anliegt und das erste Halteelement in die Bohrung eingebracht ist, so kann das zweite Halteelement durch einen Rand der Bohrung so beiseite gedrückt werden, dass es auf die zweite Seite des flächigen Elements nicht mehr oder nur noch teilweise aufsetzt. Ist ein Querschnitt der Aussparung in dem flächigen Element allerdings kleiner als ein Querschnitt der Bohrung, so kann das zweite Halteelement weiterhin das flächige Element hintergreifen und auf dieses eine Kraft ausüben. Überraschenderweise hat es sich hierbei herausgestellt, dass durch das zweite Halteelement auch der Halt der Befestigungsklammer in der Bohrung verbessert wird. Aufgrund des zweiten Befestigungselements ergibt sich eine verbesserte Stabilität der Befestigungsklammer gegenüber Kräften, die auf Befestigungsklammer ausgeübt werden. Dadurch kann eine kraftschlüssige oder eine sonstige Verbindung des ersten Halteelements mit der Bohrung verbessert werden.

Vorzugsweise greift das erste Halteelement so in die Bohrung ein, dass eine kraftschlüssige Verbindung zwischen dem ersten Halteelement und der Bohrung entsteht. Das erste Halteelement kann erfindungsgemäß aber auch eine sonstige Verbindung mit der Bohrung eingehen, beispielsweise eine Magnetverbindung oder eine Rastverbindung.

Besonders bevorzugt sind das erste Halteelement und das zweite Halteelement flächig ausgebildet. Erfindungsgemäß können das erste und das zweite Halteelement als zungenförmige, langgestreckte Elemente ausgebildet sein. Solchermaßen ausgebildete Elemente lassen sich einfach aus gängigen Werkstoffen herstellen und sind aufgrund ihrer Form in einer zu einer flachen Seite des zungenförmigen Elements senkrechten Richtung leicht verbiegbar.

Gemäß einer besonderen Ausführungsform der Erfindung greift das erste Halteelement in eine Windung des Gewindes ein, wenn die Anlageebene auf der ersten Seite des flächigen Elements aufliegt, sodass die Befestigungsklammer in dem Gewinde in einer zu dem Gewinde axialen Richtung festgelegt ist. Gemäß dieser Ausführungsform wird ein besonders starker Halt der Befestigungsklammer in der Bohrung erreicht, denn es wird eine formschlüssige Verbindung zwischen der Befestigungsklammer und dem Gewinde hergestellt. Um die Befestigungsklammer in die Bohrung einzubringen, kann sie entlang des Gewindes in dieses eingedreht werden. Gemäß möglicher Ausführungsformen der Erfindung kann die Befestigungsklammer jedoch auch über mehrere Windungen hinwegbewegt werden, bevor sie in einer Windung einrastet. Die Befestigungsklammer kann aus der Bohrung durch eine Drehbewegung entfernt werden.

Das erste Befestigungselement muss gemäß dieser Ausführungsform solchermaßen ausgebildet sein, dass es dazu geeignet ist, in das Gewinde der Bohrung einzugreifen. Während das erste Befestigungselement aus der Bohrung herausgedreht wird, kann das zweite Befestigungselement noch eine Anpresskraft auf das flächige Element ausüben, sodass die Drehbewegung stabilisiert wird. Falls es gewünscht ist, ist es aber auch möglich, das zweite Befestigungselement aus der Aussparung zu lösen, bevor das erste Befestigungselement vollständig aus der Bohrung herausgedreht worden ist.

Es ist bevorzugt, wenn das erste Halteelement einen ersten Schenkel aufweist und in einen zweiten Schenkel mündet, und wobei der erste Schenkel und der zweite Schenkel einen spitzen Winkel einschließen. Durch einen solchen Aufbau kann das elastische erste Halteelement seine Haltefunktion bei einem niedrigen Materialaufwand besonders gut erfüllen. Der Winkel zwischen dem ersten und dem zweiten Schenkel lässt sich vorzugsweise elastisch verändern.

Ganz besonders bevorzugt sind der erste Schenkel und der zweite Schenkel des ersten Halteelements durch ein Verbindungselement voneinander beabstandet, wobei der erste Schenkel und der zweite Schenkel so ausgerichtet sind, dass zwei gedachte Geraden, die durch den ersten Schenkel und den zweiten Schenkel verlaufen, entweder parallel zueinander verlaufen oder einen Winkel bis 20°, vorzugsweise kleiner 10° einschließen. Dies erlaubt eine besonders gute Wirkverbindung des ersten Halteelements mit der Bohrung.

Erfindungsgemäß kann an einem Ende des zweiten Schenkels des ersten Halteelements ein erster Halteabschnitt ausgebildet sein, der in einem Winkel von 25° bis 65°, vorzugsweise zwischen 35° und 55° auf einer dem Gewinde zugewandten Seite des ersten Halteelements zu dem zweiten Schenkel des ersten Halteelements ausgerichtet ist. Aufgrund seines Neigungswinkels ist das Halteelement dazu geeignet, in eine Windung des Gewindes einzugreifen. Das Halteelement kann elastisch ausgebildet sein. In diesem Fall kann das Halteelement aufgrund seines Neigungswinkels beim Einschieben der Befestigungsklammer in die Bohrung über mehrere Windungen des Gewindes herüberbeziehungsweise hindurchgezogen werden. Wird jedoch versucht, die Befestigungsklammer aus der Bohrung herauszuziehen, so kann das Halteelement aufgrund seines Neigungswinkels nicht in solcher Weise elastisch verformt werden, dass es sich aus der Windung, in die es eingreift, löst.

Vorzugsweise ist das erste Halteelement zu einer Halteelementspitze hin verjüngt ausgebildet. Dies erleichtert einen Eingriff des Halteelements in eine Windung des Gewindes der Bohrung. Das erste Halteelement kann dabei in einer dreieckigen oder einer abgerundeten Form zu der Halteelementspitze hin verjüngt ausgebildet sein. Es sind erfindungsgemäß aber auch weitere Formen möglich, in denen das erste Halteelement zu der Halteelementspitze hin verjüngt sein kann. Erfindungsgemäß kann der erste Schenkel des ersten Halteelements eine Sicke oder eine Ausbuchtung aufweisen. Dies vermindert die Elastizität des ersten Schenkels des ersten Halteelements. Außerdem wird hierdurch eine definierte Fläche bereitgestellt, um flächig auf eine Innenwand der Bohrung aufzusetzen. Es hat sich herausgestellt, dass eine Ausführung der Befestigungsklammer, die eine Sicke in dem ersten Schenkel des ersten Halteelements aufweist, besonders gut in die Bohrung eingreift und das Halteelement dabei besonders große Haltekräfte auszuüben vermag.

Zwischen dem ersten Schenkel und dem zweiten Schenkel des zweiten Halteelements ist vorzugsweise ein Winkel von 25° bis 65°, vorzugsweise zwischen 35° bis 55° vorgesehen. Aufgrund seines Neigungswinkels ist das Halteelement dazu geeignet, eine große Rückhaltekraft auf das flächige Element auszuüben, wobei es außerdem dazu geeignet ist, durch die Aussparung in dem flächigen Element hindurchgeführt zu werden. Drückt man den ersten und den zweiten Schenkel des zweiten Halteelements zusammen, so ist es möglich, die Befestigungsklammer aus der Aussparung in dem flächigen Element herauszuziehen.

Erfindungsgemäß kann an einem Ende des zweiten Schenkels des zweiten Halteelements ein in einem rechten Winkel von dem zweiten Schenkel des zweiten Halteelements abzweigender zweiter Halteabschnitt vorgesehen sein. Der zweite Halteabschnitt ist vorzugsweise flächig ausgebildet. Ein solcher abzweigender Halteabschnitt vergrößert eine Fläche, auf der das zweite Halteelement eine Anpresskraft auf das flächige Element auszuüben vermag. Dadurch sitzt das zweite Halteelement besonders stabil auf dem flächigen Element auf. Gemäß einer möglichen Ausführungsform der Erfindung ist das erste Halteelement an der Anlageebene mit dem Anlageabschnitt verbunden. Hält die Befestigungsklammer ein flächiges Element an einem Bauelement, so wird durch das zweite Halteelement die Befestigungsklammer und damit auch die Anlageebene an das flächige Element herangedrückt, wodurch die Anlageebene durch eine äußere Einwirkung auf die Befestigungsklammer nur schwerlich verschoben werden kann. Damit ist das an der Anlageebene vorgesehene erste Halteelement besonders belastbar gegenüber äußeren Einwirkungen, wenn das flächige Element an dem Bauelement befestigt ist.

Gemäß einer weiteren Ausführungsform der Erfindung ist das zweite Halteelement mit dem Anlageabschnitt an einer Schwenkebene verbunden, wobei die Schwenkebene elastisch mit der Anlageebene verbunden ist. Somit wird der zweite Anlageabschnitt elastisch an der Befestigungsklammer gehalten. Wird die Befestigungsklammer durch die Aussparung des flächigen Elements hindurchgeführt, so kann die Schwenkebene in Richtung der Anlageebene geneigt werden. Dies erlaubt es dem zweiten Halteelement, das flächige Element zu hintergreifen. Je dicker das flächige Element ausgebildet ist, umso weiter muss die Schwenkebene in Richtung der Anlageebene geneigt werden, damit das zweite Halteelement das flächige Element hintergreifen kann.

Ganz besonders bevorzugt ist die Schwenkebene von der Anlageebene durch mindestens ein Beabstandungselement beabstandet. Hierdurch wird es vermieden, dass die Schwenkebene direkt auf die Anlageebene aufsetzt, wenn die Schwenkebene in Richtung der Anlageebene geneigt wird. Hierdurch wird es vermieden, dass die Schwenkebene zu weit in Richtung der Anlageebene geneigt wird, wobei ein Übergangsbereich zwischen der Schwenkebene und der Anlageebene so beschädigt werden könnte, dass die Schwenkebene und die Anlageebene nicht mehr elastisch miteinander verbunden sind.

Vorzugsweise sind das erste Halteelement und das zweite Halteelement in einer Ebene angeordnet. Dies erlaubt eine besonders kompakte Ausgestaltung der Befestigungsklammer. Ein solcher Aufbau ist ferner zweckmäßig, da hierdurch eine Kontaktstelle des ersten Halteelements mit der Bohrung und eine Kontaktstelle des zweiten Halteelements mit dem flächigen Element in einer Ebene liegen, wodurch die Befestigungsklammer besonders stabil an der Bohrung und dem flächigen Element anliegt.

Ganz besonders bevorzugt ist die Befestigungsklammer einstückig ausgeführt. Eine einstückig ausgeführte erfindungsgemäße Befestigungsklammer ist besonders stabil und kann in einfacher Weise gefertigt werden. Gemäß einer besonderen Ausführungsform der Erfindung ist die Befestigungsklammer aus einem Metall oder aus einer Metalllegierung ausgeführt. Erfindungsgemäß ist eine Fertigung der Befestigungsklammer aus einem Blechstreifen möglich, aus dem ein Abschnitt ausgestanzt wird, aus der anschließend durch eine Verbiegung des Abschnitts die erfindungsgemäße Befestigungsklammer hergestellt wird. Dieses Herstellungsverfahren erlaubt es, eine einstückige Befestigungsklammer kostengünstig herzustellen.

Es ist besonders vorteilhaft, wenn die Befestigungsklammer aus Stahl ausgeführt ist. Stahl erfüllt in ganz besonderer Weise die Anforderungen einer erfindungsgemäßen Befestigungsklammer im Hinblick auf die Parameter Zugfestigkeit, Elastizität und insbesondere Hitzebeständigkeit. Eine aus Stahl gefertigte Befestigungsklammer behält auch noch bei hohen Temperaturen ihre vorteilhaften Halteeigenschaften.

Es ist erfindungsgemäß ebenfalls möglich, dass die Befestigungsklammer aus einem geeigneten Kunststoffmaterial hergestellt ist, das eine ausreichende Festigkeit sowie federnde Eigenschaften aufweist. Geeignete Kunststoffmaterialien sind beispielsweise Polyamid, Polyoxymethylen oder Polybutylenterephthalat.

Weitere vorteilhafte Ausführungsformen der erfindungsgemäßen Befestigungsklammer sind in den Zeichnungen dargestellt.

Dabei zeigt:
Fig. 1 eine schematische Darstellung der erfindungsgemäßen Befestigungsklammer in einer Seitenansicht,
Fig. 2 eine schematische Darstellung der erfindungsgemäßen Befestigungsklammer in einer Draufsicht,
Fig. 3 eine schematische Darstellung der erfindungsgemäßen Befestigungsklammer in einer Vorderansicht und
Fig. 4 eine schematische Darstellung der erfindungsgemäßen Befestigungsklammer in einer Bohrung in einer Querschnittsansicht.

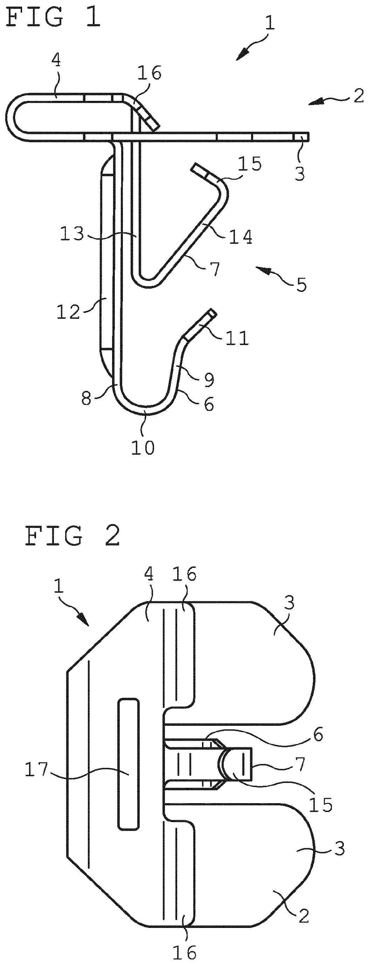

Fig. 1 zeigt eine schematische Darstellung einer möglichen Ausführungsform der erfindungsgemäßen Befestigungsklammer 1 in einer Seitenansicht. Die Befestigungsklammer 1 weist einen Anlageabschnitt 2 auf. Der Anlageabschnitt 2 ist dazu geeignet, auf einer ersten Seite eines flächigen Elements (nicht gezeigt) aufgesetzt zu werden. Der Anlageabschnitt 2 umfasst zu diesem Zweck eine Anlageebene 3. Er umfasst ferner eine Schwenkebene 4. Die Befestigungsklammer 1 weist außerdem einen Verbindungsabschnitt 5 auf. Der Verbindungsabschnitt 5 dient dazu, eine sichere Verbindung der der Befestigungsklammer 1 mit dem flächigen Element und einem Bauelement (nicht gezeigt) zu gewährleisten. Dazu weist der Verbindungsabschnitt 5 ein erstes Halteelement 6 und ein zweites Halteelement 7 auf.

Das erste Halteelement 6 ist dazu geeignet, in die Bohrung einzugreifen, sodass die Befestigungsklammer 1 nicht aus der Bohrung herausgezogen werden kann. Das zweite Halteelement 7 ist dazu geeignet, das flächige Element so zu hintergreifen, dass durch die Befestigungsklammer 1 eine Anpresskraft auf eine zweite Seite des flächigen Elements ausgeübt wird, wenn die Anlageebene 3 auf der ersten Seite des flächigen Elements aufliegt. Somit wird die Befestigungsklammer 1 an dem flächigen Element gehalten.

Das erste Halteelement 1 ist mit der Anlageebene 3 verbunden. Das zweite Halteelement 7 ist mit der Schwenkebene 4 verbunden. Die Anlageebene 3 ist mit der Schwenkebene 4 elastisch verbunden, sodass die Schwenkebene 4 in Richtung des flächigen Elements verschwenkt werden kann, damit das zweite Halteelement 7 flächige Elemente unterschiedlicher Dicken hintergreifen kann. Jedoch ist das zweite Halteelement 7 auch selbst elastisch, sodass es seine Form auch zu diesem Zweck anzupassen vermag.

Hierdurch wird das erste Halteelement 6 gegenüber Kräften, die relativ zu der Bohrung in radialer Richtung auf die das erste Halteelement 6 wirken, stabilisiert. Das erste Halteelement 6 weist einen ersten Schenkel 8, einen zweiten Schenkel 9 und ein Verbindungselement 10 zwischen dem ersten Schenkel 8 und dem zweiten Schenkel 9 auf. An einem Ende des zweiten Schenkels 9 weist das erste Halteelement 6 einen ersten Halteabschnitt 11 auf, der dazu geeignet ist, in ein Gewinde der Bohrung einzugreifen. Der erste Schenkel 8 weist eine Ausbuchtung 12 auf.

Das zweite Halteelement 7 umfasst einen ersten Schenkel 13 und einen zweiten Schenkel 14. An einem Ende des zweiten Schenkels 13 befindet sich ein zweiter Halteabschnitt 15, der dazu geeignet ist, eine Kraft auf die zweite Seite flächigen Elements auszuüben. Die Befestigungsklammer 1 ist einstückig aus Stahl ausgeführt. Die Schwenkebene 4 ist von der Anlageebene 3 durch ein Beabstandungselement 16 beabstandet.

Fig. 2 zeigt eine schematische Darstellung der erfindungsgemäßen Befestigungsklammer 1 gemäß Fig. 1 in einer Draufsicht. Der Anlageabschnitt 2 weist zwei Anlageebenen 3 auf. In der Schwenkebene 4 befindet sich eine Nut 17. Gezeigt sind außerdem die zwei Beabstandungselemente 16, die an der Schwenkebene 3 vorgesehen sind, das erste Halteelement 6, das zweite Halteelement 7 und der zweite Halteabschnitt 15. Der zweite Halteabschnitt 15 ist zu einem Ende hin verjüngt und abgerundet ausgebildet.

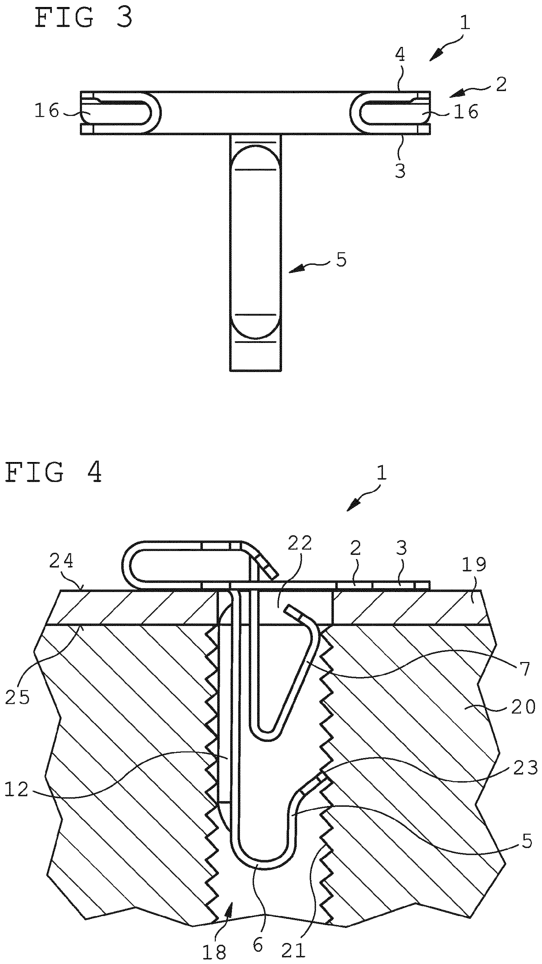

Fig. 3 zeigt eine schematische Darstellung der erfindungsgemäßen Befestigungsklammer 1 gemäß Fig. 1 und 2 in einer Vorderansicht. Dabei sind der Anlageabschnitt 2 und der Verbindungsabschnitt 5 gezeigt. Die Anlageebene 3, die Schwenkebene 4 und zwei Beabstandungselemente 16 sind in dem Anlageabschnitt 2 sichtbar. In dem Verbindungsabschnitt 5 ist lediglich das erste Halteelement 6 mit der Ausbuchtung 12 sichtbar.

Fig. 4 zeigt eine schematische Darstellung der erfindungsgemäßen Befestigungsklammer 1 gemäß einer weiteren Ausführungsform in einer Bohrung 18 in einer Querschnittsansicht. Dabei hält die Befestigungsklammer 1 ein flächiges Element 19 an einem Bauelement 20, in das die Bohrung 18 eingebracht ist. Die Bohrung 18 weist ein Gewinde 21 auf. Die Befestigungsklammer 1 ist durch eine Aussparung 22 in dem flächigen Element 19 hindurchgeführt. Diese Ausführungsform weist keine Beabstandungselemente 16 auf. Mit dem ersten Halteelement 6 greift die Befestigungsklammer 1 in eine Windung 23 des Gewindes 21 ein. Dabei setzt das erste Halteelement 6 mit einer Ausbuchtung 16 auf einer gegenüberliegenden Seite des Gewindes 21 auf. Die Befestigungsklammer 1 sitzt somit fest in der Bohrung 18 und kann nicht aus dieser entfernt werden.

Das flächige Element 19 weist eine erste Seite 24 und eine zweite Seite 25 auf. Die Anlageebene 19 liegt auf der ersten Seite 24 auf. Die zweite Seite 25 liegt auf dem Bauelement 20 auf. Das zweite Halteelement 7 kann vorliegend das flächige Element 19 nicht hintergreifen, da die Bohrung 18 einen Durchmesser aufweist, der ungefähr einem Durchmesser der Aussparung 22 des flächigen Elements 19 entspricht.

### BEZUGSZEICHENLISTE

- 1.: Befestigungsklammer
- 2.: Anlageabschnitt
- 3.: Anlageebene
- 4.: Schwenkebene
- 5.: Verbindungsabschnitt
- 6.: Erstes Halteelement
- 7.: Zweites Halteelement
- 8.: Erster Schenkel des ersten Halteelements
- 9.: Zweiter Schenkel des ersten Halteelements
- 10.: Verbindungselement
- 11.: Erster Halteabschnitt
- 12.: Ausbuchtung
- 13.: Erster Schenkel des zweiten Halteelements
- 14.: Zweiter Schenkel des zweiten Halteelements
- 15.: Zweiter Halteabschnitt
- 16.: Beabstandungselement
- 17.: Nut
- 18.: Bohrung
- 19.: Flächiges Element
- 20.: Bauelement
- 21.: Gewinde
- 22.: Aussparung
- 23.: Windung
- 24.: Erste Seite des flächigen Elements
- 25.: Zweite Seite des flächigen Elements

## Patentansprüche

1. Befestigungsklammer (1) zur Festlegung eines flächigen Elements (19), das eine Aussparung (22) aufweist, an einem Bauelement (20), das eine Bohrung (18) mit einem Gewinde (21) aufweist, wobei die Befestigungsklammer (1) einen Anlageabschnitt (2) mit mindestens einer Anlageebene (3) zur Anlage an eine erste Seite des flächigen Elements (19) aufweist, die von der Bohrung (18) abgewandt ist, und wobei die Befestigungsklammer (1) in einem Verbindungsabschnitt (5) ein elastisches erstes Halteelement (6) aufweist, das mit dem Anlageabschnitt (2) verbunden ist und so ausgebildet ist, dass es durch die Aussparung (22) des flächigen Elements (19) hindurch in die Bohrung (18) eingreifen kann, wenn die Anlageebene (3) auf der ersten Seite (24) des flächigen Elements (19) aufliegt, **dadurch gekennzeichnet, dass** die Befestigungsklammer (1) in dem Verbindungsabschnitt (5) ein elastisches zweites Halteelement (7) aufweist, das mit dem Anlageabschnitt (2) verbunden ist und so ausgebildet ist, dass es durch die Aussparung (22) des flächigen Elements (19) hindurch das flächige Element (19) an einer zweiten Seite (25) des flächigen Elements (19), die der Bohrung (18) zugewandt ist, so hintergreifen kann, dass durch die Befestigungsklammer (1) eine Anpresskraft auf die zweite Seite (25) ausgeübt werden kann, wenn die Anlageebene (3) auf der ersten Seite (24) des flächigen Elements (19) aufliegt, und wobei das zweite Haltelement (7) einen ersten Schenkel (13) aufweist und in einen zweiten Schenkel (14) mündet, wobei der erste Schenkel (13) und der zweite Schenkel (14) einen spitzen Winkel einschließen.

2. Befestigungsklammer (1) nach einem der vorhergehenden Ansprüche, **dadurch gekennzeichnet, dass** das erste Halteelement (6) und das zweite Halteelement (7) flächig ausgebildet sind.

3. Befestigungsklammer (1) nach einem der vorhergehenden Ansprüche, **dadurch gekennzeichnet, dass** das erste Halteelement (6) in eine Windung (23) des Gewindes (21) eingreifen kann, wenn die Anlageebene (3) auf der ersten Seite des flächigen Elements (19) aufliegt, sodass die Befestigungsklammer (1) in dem Gewinde (21) in einer zu dem Gewinde (21) axialen Richtung festlegbar ist.

4. Befestigungsklammer (1) nach einem der vorhergehenden Ansprüche, **dadurch gekennzeichnet, dass** das erste Halteelement (6) einen ersten Schenkel (8) aufweist und in einen zweiten Schenkel (9) mündet, und wobei der erste Schenkel (8) und der zweite Schenkel (9) einen spitzen Winkel einschließen.

5. Befestigungsklammer (1) nach Anspruch 4, **dadurch gekennzeichnet, dass** der erste Schenkel (8) und der zweite Schenkel (9) des ersten Halteelements (6) durch ein Verbindungselement (10) voneinander beabstandet sind, wobei der erste Schenkel (8) und der zweite Schenkel (9) so ausgerichtet sind, dass zwei gedachte Geraden, die durch den ersten Schenkel (8) und den zweiten Schenkel (9) verlaufen, entweder parallel zueinander ausgerichtet sind oder einen Winkel bis 20°, vorzugsweise kleiner 10° einschließen.

6. Befestigungsklammer (1) nach Anspruch 4 oder Anspruch 5, **dadurch gekennzeichnet, dass** an einem Ende des zweiten Schenkels (9) des ersten Halteelements (6) ein erster Halteabschnitt (11) ausgebildet ist, der in einem Winkel von 25° bis 65°, vorzugsweise zwischen 35° bis 55° auf einer dem Gewinde (21) zugewandten Seite des ersten Halteelements (6) zu dem zweiten Schenkel (9) des ersten Halteelements (6) ausgerichtet ist.

7. Befestigungsklammer (1) nach einem der Ansprüche 4 bis 6, **dadurch gekennzeichnet, dass** das erste Halteelement (6) zu einer Halteelementspitze hin verjüngt ausgebildet ist.

8. Befestigungsklammer (1) nach einem der Ansprüche 4 bis 7, **dadurch gekennzeichnet, dass** der erste Schenkel (8) des ersten Halteelements (6) eine Sicke oder eine Ausbuchtung (12) aufweist.

9. Befestigungsklammer (1) nach einem der vorhergehenden Ansprüche, **dadurch gekennzeichnet, dass** zwischen dem ersten Schenkel (13) und dem zweiten Schenkel (14) des zweiten Halteelements (7) ein Winkel von 25° bis 65°, vorzugsweise zwischen 35° bis 55° vorgesehen ist.

10. Befestigungsklammer (1) nach einem der vorhergehenden Ansprüche, **dadurch gekennzeichnet, dass** an einem Ende des zweiten Schenkels (14) des zweiten Halteelements (7) ein in einem rechten Winkel von dem zweiten Schenkel (14) des zweiten Halteelements (7) abzweigender zweiter Halteabschnitt (15) vorgesehen ist.

11. Befestigungsklammer (1) nach Anspruch 10, **dadurch gekennzeichnet, dass** der zweite Halteabschnitt (15) flächig ausgebildet ist.

12. Befestigungsklammer (1) nach einem der vorhergehenden Ansprüche, **dadurch gekennzeichnet, dass** das erste Halteelement (6) an der Anlageebene (3) mit dem Anlageabschnitt (2) verbunden ist.

13. Befestigungsklammer (1) nach einem der vorhergehenden Ansprüche, **dadurch gekennzeichnet, dass** das zweite Halteelement (7) an einer Schwenkebene (4) mit dem Anlageabschnitt (2) verbunden ist, wobei die Schwenkebene (4) elastisch mit der Anlageebene (3) verbunden ist.

14. Befestigungsklammer (1) nach Anspruch 13, **dadurch gekennzeichnet, dass** die Schwenkebene (4) von der Anlageebene (3) durch mindestens ein Beabstandungselement (16) beabstandet ist.

15. Befestigungsklammer (1) nach einem der vorhergehenden Ansprüche, **dadurch gekennzeichnet, dass** das erste Halteelement (6) und das zweite Halteelement (7) in einer Ebene angeordnet sind.

16. Befestigungsklammer (1) nach einem der vorhergehenden Ansprüche, **dadurch gekennzeichnet, dass** die Befestigungsklammer (1) einstückig ausgeführt ist.

## Claims

1. Fixing clip (1) for securing a planar element (19) having a recess (22) to a component (20) having a bore (18) with a thread (21), wherein the fixing clip (1) comprises a contact section (2) with at least one contact plane (3) for contact with a first side of the planar element (19) that faces away from the bore (18), and wherein the fixing clip (1) comprises, in a connecting section (5), an elastic first retaining element (6) which is connected to the contact section (2) and is configured such that it can engage through the recess (22) of the planar element (19) into the bore (18) when the contact plane (3) is in contact with the first side (24) of the planar element (19), **characterised in that** the fixing clip (1) comprises, in the connecting section (5), an elastic second retaining element (7) which is connected to the contact section (2) and is configured such that it can engage through the recess (22) of the planar element (19) behind the planar element (19) on a second side (25) of the planar element (19) that faces towards the bore (18), in such a way that a contact pressure can be exerted by the fixing clip (1) on the second side (25) when the contact plane (3) is in contact with the first side (24) of the planar element (19), and wherein the second retaining element (7) comprises a first leg (13) and leads into a second leg (14), wherein the first leg (13) and the second leg (14) form an acute angle.

2. Fixing clip (1) according to one of the preceding claims, **characterised in that** the first retaining element (6) and the second retaining element (7) have a planar configuration.

3. Fixing clip (1) according to one of the preceding claims, **characterised in that** the first retaining element (6) can engage in a turn (23) of the thread (21) when the contact plane (3) is in contact with the first side of the planar element (19), so that the fixing clip (1) can be fixed in the thread (21) in an axial direction relative to the thread (21).

4. Fixing clip (1) according to one of the preceding claims, **characterised in that** the first retaining element (6) comprises a first leg (8) and leads into a second leg (9), and wherein the first leg (8) and the second leg (9) form an acute angle.

5. Fixing clip (1) according to claim 4, **characterised in that** the first leg (8) and the second leg (9) of the first retaining element (6) are spaced apart by a connecting element (10), wherein the first leg (8) and the second leg (9) are oriented such that two imaginary straight lines running through the first leg (8) and the second leg (9) are either oriented parallel to each other or form an angle of up to 20° and preferably less than 10°.

6. Fixing clip (1) according to claim 4 or claim 5, **characterised in that** at one end of the second leg (9) of the first retaining element (6) a first retaining section (11) is formed, which is oriented at an angle of 25° to 65°, preferably between 35° and 55°, to the second leg (9) of the first retaining element (6) on a side of the first retaining element (6) facing the thread (21).

7. Fixing clip (1) according to one of claims 4 to 6, **characterised in that** the first retaining element (6) is configured such that it tapers towards a retaining element tip.

8. Fixing clip (1) according to one of claims 4 to 7, **characterised in that** the first leg (8) of the first retaining element (6) comprises a bead or a protrusion (12) .

9. Fixing clip (1) according to one of the preceding claims, **characterised in that** between the first leg (13) and the second leg (14) of the second retaining element (7) an angle of 25° to 65°, preferably between 35° and 55°, is provided.

10. Fixing clip (1) according to one of the preceding claims, **characterised in that** at one end of the second leg (14) of the second retaining element (7) a second retaining section (15) is provided which branches at a right angle from the second leg (14) of the second retaining element (7) .

11. Fixing clip (1) according to claim 10, **characterised in that** the second retaining section (15) has a planar configuration.

12. Fixing clip (1) according to one of the preceding claims, **characterised in that** the first retaining element (6) is connected to the contact section (2) on the contact plane (3) .

13. Fixing clip (1) according to one of the preceding claims, **characterised in that** the second retaining element (7) is connected to the contact section (2) on a pivot plane (4), wherein the pivot plane (4) is resiliently connected to the contact plane (3).

14. Fixing clip (1) according to claim 13, **characterised in that** the pivot plane (4) is spaced apart from the contact plane (3) by at least one spacer element (16).

15. Fixing clip (1) according to one of the preceding claims, **characterised in that** the first retaining element (6) and the second retaining element (7) are arranged in a plane.

16. Fixing clip (1) according to one of the preceding claims, **characterised in that** the fixing clip (1) is designed in one piece.

## Revendications

1. Clip de fixation (1) servant à immobiliser un élément (19) plat, qui présente un évidement (22), au niveau d'un composant (20), qui présente un alésage (18) avec un filetage (21), dans lequel le clip de fixation (1) présente une section d'appui (2) avec au moins un plan d'appui (3) destiné à venir en appui au niveau d'un premier côté de l'élément (19) plat, qui est opposé à l'alésage (18), et dans lequel le clip de fixation (1) présente dans une section de liaison (5) un premier élément de maintien (6) élastique, qui est relié à la section d'appui (2) et est réalisé de telle sorte qu'il peut venir en prise à travers l'évidement (22) de l'élément (19) plat avec l'alésage (18) quand le plan d'appui (3) repose sur le premier côté (24) de l'élément plat (19), **caractérisé en ce que** le clip de fixation (1) présente dans la section de liaison (5) un second élément de maintien (7) élastique, qui est relié à la section d'appui (2) et est réalisé de telle sorte qu'il peut venir en prise par l'arrière à travers l'évidement (22) de l'élément (19) plat avec l'élément (19) plat au niveau d'un deuxième côté (25) de l'élément (19) plat, qui est tourné vers l'alésage (18) de telle sorte qu'une force de compression peut être exercée sur le deuxième côté (25) par le clip de fixation (1) quand le plan d'appui (3) repose sur le premier côté (24) de l'élément (19) plat, et dans lequel le second élément de maintien (7) présente une première branche (13) et débouche dans une seconde branche (14), dans lequel la première branche (13) et la seconde branche (14) forment un angle aigu.

2. Clip de fixation (1) selon l'une quelconque des revendications précédentes, **caractérisé en ce que** le premier élément de maintien (6) et le second élément de maintien (7) sont réalisés de manière plate.

3. Clip de fixation (1) selon l'une quelconque des revendications précédentes, **caractérisé en ce que** le premier élément de maintien (6) peut venir en prise avec une spire (23) du filetage (21) quand le plan d'appui (3) repose sur le premier côté de l'élément (19) plat si bien que le clip de fixation (1) peut être immobilisé dans le filetage (21) dans une direction axiale par rapport au filetage (21).

4. Clip de fixation (1) selon l'une quelconque des revendications précédentes, **caractérisé en ce que** le premier élément de maintien (6) présente une première branche (8) et débouche dans une seconde branche (9), et dans lequel la première branche (8) et la seconde branche (9) forment un angle aigu.

5. Clip de fixation (1) selon la revendication 4, **caractérisé en ce que** la première branche (8) et la seconde branche (9) du premier élément de maintien (6) sont espacées l'une de l'autre par un élément de liaison (10), dans lequel la première branche (8) et la seconde branche (9) sont orientées de telle sorte que deux droites imaginaires, qui s'étendent à travers la première branche (8) et la seconde branche (9), sont orientées soit de manière parallèle l'une par rapport à l'autre ou forment un angle jusqu'à 20°, de préférence inférieur à 10°.

6. Clip de fixation (1) selon la revendication 4 ou la revendication 5, **caractérisé en ce qu'**est réalisée au niveau d'une extrémité de la seconde branche (9) du premier élément de maintien (6) une première section de maintien (11), qui est orientée selon un angle de 25° à 65°, de préférence entre 35° à 55° sur un côté, tourné vers le filetage (21), du premier élément de maintien (6) vers la seconde branche (9) du premier élément de maintien (6).

7. Clip de fixation (1) selon l'une quelconque des revendications 4 à 6, **caractérisé en ce que** le premier élément de maintien (6) est réalisé de manière à se rétrécir vers une pointe d'élément de maintien.

8. Clip de fixation (1) selon l'une quelconque des revendications 4 à 7, **caractérisé en ce que** la première branche (8) du premier élément de maintien (6) présente une moulure ou un renflement (12).

9. Clip de fixation (1) selon l'une quelconque des revendications précédentes, **caractérisé en ce qu'**est prévu entre la première branche (13) et la seconde branche (14) du second élément de maintien (7) un angle de 25° à 65°, de préférence entre 35° à 55°.

10. Clip de fixation (1) selon l'une quelconque des revendications précédentes, **caractérisé en ce qu'**au niveau d'une extrémité de la seconde branche (14) du second élément de maintien (7) est prévue une seconde section de maintien (15) en embranchement à angle droit à partir du seconde branche (14) du second élément de maintien (7).

11. Clip de fixation (1) selon la revendication 10, **caractérisé en ce que** la seconde section de maintien (15) est réalisée de manière plate.

12. Clip de fixation (1) selon l'une quelconque des revendications précédentes, **caractérisé en ce que** le premier élément de maintien (6) est relié au niveau du plan d'appui (3) à la section d'appui (2).

13. Clip de fixation (1) selon l'une quelconque des revendications précédentes, **caractérisé en ce que** le second élément de maintien (7) est relié au niveau d'un plan de pivotement (4) à la section d'appui (2), dans lequel le plan de pivotement (4) est relié de manière élastique au plan d'appui (3).

14. Clip de fixation (1) selon la revendication 13, **caractérisé en ce que** le plan de pivotement (4) est espacé du plan d'appui (3) par au moins un élément d'espacement (16).

15. Clip de fixation (1) selon l'une quelconque des revendications précédentes, **caractérisé en ce que** le premier élément de maintien (6) et le second élément de maintien (7) sont disposés dans un plan.

16. Clip de fixation (1) selon l'une quelconque des revendications précédentes, **caractérisé en ce que** le clip de fixation (1) est réalisé d'un seul tenant.
